# EUROPEAN PATENT APPLICATION

(11) **EP 4 116 278 A1**
(43) Date of publication of application: **11.01.2023**
(21) Application number: 21184075.6
(22) Date of filing: 06.07.2021
(51) Int. Cl.: C04B 41/82, B01D 67/00, B01J 31/12

(54) **METHOD FOR PRODUCING AN ORGANIC FUNCTIONALIZED INORGANIC SUBSTRATE**

(71) Applicant: VITO NV, 2400 Mol (BE); Universiteit Antwerpen, 2000 Antwerpen (BE)
(72) Inventor: MEYNEN, Vera, B-2440 Geel (BE); VAN DIJCK, Jeroen, B-2100 Deurne (BE); BUEKENHOUDT, Anita, B-2400 Mol (BE); BECKERS, Herman, B-2400 Mol (BE)
(74) Representative: AWA Benelux

(57) **Abstract**

The present invention discloses a method for producing an organic functionalized solid inorganic substrate, a surface of the inorganic substrate comprising a hydroxide and/or an oxide comprising an element M, the element M being a metal or a metalloid. The method comprises drying the surface; optionally removing protons from the surface; and contacting the surface with an organometallic reagent comprising at least one organic functional moiety, thereby obtaining the organic functionalized inorganic substrate, the at least one organic functional moiety being attached to the element M of the hydroxide and/or the oxide by means of a direct M-C bond, wherein the drying step comprises contacting the surface with a flow comprising an inert gas. The present invention further discloses the use of the organic functionalized inorganic substrate obtained by the method of the invention as a membrane, a catalyst, a sorbent, a sensor or an electronic component, or as a substrate in filtration, adsorption, chromatography and/or separation processes.

## Description

### Technical field

The present invention relates to a method for producing an organic functionalized inorganic substrate. In particular, the invention provides a method for modifying a metal or metalloid hydroxide and/or a metal or metalloid oxide comprised at a surface of the inorganic substrate with an organometallic reagent, such as a Grignard reagent. The present invention further relates to a use of the organic functionalized inorganic substrate obtained by the method of the invention.

### Background art

Ceramic materials, such as membranes, shaped supports or carrier materials, coated layers or powders, are made from inorganic materials such as silica, titania and zirconia oxides, including mixtures thereof. Compared to polymeric membranes, ceramic membranes show several advantages: they are chemically inert and feature high mechanical, thermal, chemical and hydrothermal stabilities. Ceramic materials are known to be robust in extreme processing conditions such as high temperatures and corrosive environments, and exhibit long lifetimes. Therefore surface modified ceramics are suitable for being used in processes where stability or a certain affinity are required, as well as in those applications where chemical resistance is necessary.

Ceramic membranes typically consist of an inorganic substrate, the surface thereof comprising a hydroxide and/or an oxide of an element M. The element M is typically, though not necessarily, a metal, such as a transition metal, or a metalloid. As a consequence of the presence of hydroxyl groups and/or oxide groups of the element M at the surface, most inorganic substrates tend to be hydrophilic. However, compared to the diversity in functionalities that can be obtained by means of organic molecules and their functional groups, the diversity in interactions that inorganic substrates can perform is limited. Consequently, this is a limiting factor for the use of inorganic substrates for certain applications. There is therefore a need to adapt the surface properties taking into account the intended application.

The surface properties can be altered by means of a surface modification, in particular a chemical surface modification, also denoted as functionalisation or grafting. The hydrophilic character can be modified to more hydrophobic by addition of additional hydrophobic groups and/or the replacement or steric hindrance of hydroxyl groups (-OH) on the surface of the inorganic substrate by other groups, such as organic functional groups. Other surface properties that can be changed are for example the presence and/or the number of selective adsorption or interaction sites, anchoring positions for immobilization, chiral sites, reactive sites for further modification(s), etc.

Various methods have been reported for the surface modification of inorganic substrates, such as solid inorganic substrates, including methods involving co-condensation reactions or grafting reactions with organosilane, organophosphonic acids, or organometallic reagents.

US 2006/0237361 discloses a method for the impregnation of a ceramic membrane with an organosilane agent. The organosilane agent is of general formula R¹R²R³R⁴Si in which at least one R group is a hydrolyzable group and at least one R group is a non-hydrolyzable group, e.g. an alkyl group or a phenyl group, which can be, at least partially, fluorinated. A condensation reaction of the hydrolyzable groups with hydroxide (-OH) groups on the substrates surface attaches the organosilane agent to the surface by an M-O-Si-R bond comprising an oxygen bridge. However, these oxygen bridges are known to be susceptible to hydrolysis, which may result in leaching of the organic functional group(s) from the substrate when in use.

'Optimization of reaction conditions for the metalorganic modification of MCM-41', S. Angloher, J. Kecht et al., Chem. Mater. 19, pages 3568-3574 (2007) discloses grafting of an organometallic reagent on periodic mesoporous silica. The substrate is dried under vacuum at 150°C for 15 hours, after which the grafting is performed using organolithium or a Grignard reagent, such as n-buthyllithium or allylmagnesium bromide, in a solvent, such as n-hexane or tetrahydrofuran (THF), at a temperature varying between -78°C and 68°C and for a duration between 2 hours and 24 hours. Si-R bonds are formed by the direct attack of the organometallic reagent at the silicon atom of a siloxane bridge.

'Synthesis - properties correlation and the unexpected role of the titania support on the Grignard surface modification', J. Van Dijck, P. Mampuys et al., Applied Surface Science 527 (2020) 146851 discloses the grafting of a Grignard reagent on the surface of a titania support. The titania support is first dried for 16 hours at 10⁻⁴ mbar and 190°C, followed by reacting with a Grignard reagent, in particular ethylmagnesium bromide, propylmagnesium chloride or octylmagnesium chloride, in dry tetrahydrofuran (THF) for a duration of 72 hours at room temperature.

WO 2010/106167 discloses a method for obtaining an organic functionalized inorganic matrix. The method comprises vacuum drying the inorganic matrix at high temperature, reacting the surface of the dried inorganic matrix with a liquid reagent such as an alcohol by submerging the matrix in the liquid reagent to remove protons from the matrix's surface, removing the excess of the liquid reagent, and reacting the matrix with an organometallic reagent. Upon reaction with the organometallic reagent, one or more organic functional groups of the reagent are attached (grafted) to the surface of the inorganic matrix by a direct M-C bond. The total process time includes several days.
It is noted that the foregoing methods using the grafting of an organometallic reagent to attach functional groups to the inorganic substrates all comprise an extensive drying step prior to the grafting with the organometallic reagent, in the form of a drying step at vacuum pressure in combination with high temperature, to remove any water present on the substrate surface , which would otherwise react with the organometallic reagent and reduce the amount of reactant available for attachment to the surface. To overcome this unwanted side reaction, state-of-the-art methods report extensive drying combined with high temperatures making the prior art methods expensive in terms of cost, energy and time.

### Summary of the invention

The present invention aims to overcome one or more of the above drawbacks. It is an aim of the invention to provide an improved method for producing an organic functionalized solid inorganic substrate, which has one or more of the following advantages: it is better suitable for scaling up to an industrial scale, it is more economical, is less complex, has a shorter total processing time, reduces the energy consumption, and involves a reduced number of processing steps.

According to a first aspect of the invention, there is therefore provided a method as set out in the appended claims. A method as described herein allows to convert a solid inorganic substrate to an organic functionalized inorganic substrate. A surface of the solid inorganic substrate comprises a hydroxide and/or an oxide. The hydroxide and/or the oxide comprise an element M, which is a metal or a metalloid. The method comprises the steps of (i) drying the surface of the inorganic substrate; (ii) optionally removing protons from the surface; and (iii) contacting the surface of the inorganic substrate with an organometallic reagent comprising at least one organic functional moiety, thereby obtaining the organic functionalized inorganic substrate. The at least one organic functional moiety is attached to the element M of the hydroxide and/or the oxide by means of a direct M-C bond. The drying step comprises contacting the inorganic substrate with a flow comprising an inert gas.

The direct M-C bond does not include an oxygen bridge between the M and C. Without wishing to be bound by theory, the inventors believe that the direct M-C bond can be a covalent M-C bond or a coordinative bond.

Advantageously, the drying step is carried out at a pressure of at least atmospheric pressure.

Advantageously, the step of contacting the surface with the flow comprising an inert gas is carried out at a temperature of at least 90°C, such as at least 95°C, preferably at least 100°C, such as at least 125°C, more preferably at least 150°C, for example at least 175°C, most preferably at least 200°C, such as at least 225°C, and in particular at least 250°C.

Advantageously, the inert gas is nitrogen, dry air, a noble gas, or a mixture of any two or more thereof. When a noble gas is used, it is preferably argon (Ar) or helium (He). Advantageously, the flow comprising an inert gas is a dry flow. Depending on the water content of the mixture of each step, the skilled person will be capable of determining a maximum water concentration allowed in the gas flow. For example the inert gas flow may comprise equal to or less than 5 vol.% water, preferably equal to or less than 1 vol.% water, more preferably equal to or less than 0.1 vol.% water, such as equal to or lower than 500 ppm water, or equal to or lower than 100 ppm water.

Advantageously, the method of this invention also contains a proton removal step. The proton removal step comprises contacting the surface of the solid inorganic substrate with a reagent capable of reacting with protons at the surface. Advantageously, upon contacting the surface with the reagent, reactive protons are removed from the surface. The reagent can be any reagent considered suitable by the skilled person for removing protons from the surface of the substrate. Examples of suitable reagents include an alcohol, an organophosphonate ester, an organophosphonic ester, an organophosphinic ester, an organophosphinic acid, or a carboxylic acid or carboxylate.

During the proton removal step, the reagent can be a gas or a vapour, i.e. the reagent in vapour phase or in gaseous phase. In the light of the present invention, the words gas and vapour are used having the same meaning and refer to the reagent in a volatile state (and thus not liquid nor solid). Alternatively, or additionally, the reagent can be a liquid reagent or an aerosol. For example, the surface of the inorganic substrate can be contacted by a first reagent in vapour phase and by a second reagent in a liquid form, i.e. a solution.

According to an embodiment, the flow comprising the inert gas further comprises the reagent, so that the drying step and the proton removal step are carried out simultaneously, i.e. so that drying and proton removal are simultaneously obtained. Preferably, the reagent comprised in the flow comprising the inert gas is present as a vapour. The flow comprising the inert gas and the gaseous reagent or the reagent in vapour phase can be obtained by methods known in the field. For example, the flow can be obtained by bubbling the inert gas through a liquid bath of the reagent, by spraying the reagent in the flow comprising the inert gas, or by evaporating the reagent followed by mixing the vaporized reagent with the flow of inert gas, which can be heated to avoid condensation of the vaporized reagent.

According to another embodiment, the step of removing protons from the surface of the inorganic substrate comprises contacting the surface with an organometallic reagent. In other words, the organometallic reagent is, according to this embodiment, the reagent capable of reacting with protons at the surface. Advantageously, the organometallic reagent is a liquid, such as a solution of the organometallic reagent in a solvent.

The organometallic reagent used for the removal of protons can be the same as or different to the organometallic reagent used for contacting with the surface of the inorganic substrate to obtain the organic functionalized inorganic substrate. For example, a first organometallic reagent, preferably in liquid phase, such as a solution of the first organometallic reagent in a first solvent, can be used to remove protons from the surface, and a second organometallic reagent, also preferably in liquid phase, such as a solution of the second organometallic reagent in a second solvent, advantageously comprising at least one organic functional moiety, can be used to react to obtain the organic functionalized solid inorganic substrate.

According to a further embodiment, two or more reagents can be used to remove protons from the surface simultaneously, i.e. by exposing the surface to the two or more reagents at the same time, subsequently, i.e. by exposing the surface to a first reagent and subsequently to a further reagent, or a combination of simultaneous and subsequent proton removal, i.e by exposing the surface to two or more reagents simultaneously, followed by subsequent exposure to two or more further reagents simultaneously. For example, a first reagent can be a gas or vapour comprised in the flow of inert gas and a second reagent can be a liquid reagent, for example an organometallic reagent, preferably a solution of an organometallic reagent in a solvent, more preferably a solution of an organometallic reagent that is diluted in a solvent.

Preferably, the organometallic reagent is a component of the formula R¹-M¹, R¹-M¹-X, or R¹-M¹-R². Advantageously, R¹ and R² are organic functional groups. R¹ and R² can be different or identical. The organometallic reagent can also be a component of the formula M¹(R¹,R²,R³), wherein R¹ and R² are as defined above and wherein R³ is an organic functional group and can be different or identical to R¹ and/or R². Advantageously, M¹ is a group la element, a group IIa element or Al, in particular Li, Mg or Al. Advantageously, X is a halogen.

Advantageously, the element M is a Group IVb metal, i.e. a Group IVb transition metal, a Group IVa metal, or a Group IVa metalloid.

The method can further comprise a washing step. Advantageously, the washing step removes any salt that is present or left at the surface of the solid inorganic substrate after contacting the surface with the organometallic reagent.

The present disclosure further provides uses of the organic functionalized inorganic substrate as set out in the appended claims. Organic functionalized inorganic substrates can be used, without being limited thereto, as a membrane, a catalyst, a sorbent, a sensor or an electronic component. The organic functionalized inorganic substrate can further be used as a substrate in filtration, adsorption, chromatography and/or separation processes.

In the art of surface modification of inorganic substrates by a direct M-C bonding it is assumed that the water content of the inorganic substrate and the concentration of reactive, usually acidic, protons at the surface must be as low as possible when the substrate is brought to reaction. The reason is that it is assumed that water remaining on the substrate and the reactive, usually acidic, protons present on the surface react with the organometallic reactant to an extent that the desired organic surface modification cannot be achieved. Besides that, formation of large amounts of salt is expected, which must be removed and is undesired. It has now been found that a desired degree of organic surface modification can nevertheless be achieved, even if a less extensive drying is carried out and the substrate still contains some water. Hence in methods according to the present disclosure, expensive and time-consuming (high) vacuum drying need not be performed and can be omitted. It has further been found that a separate proton removal step can be omitted and that proton removal can be effectuated by the organometallic reactant to a sufficient extent. Thereby, unwanted salt formation has been found negligible. This is surprising.

Without wishing to be bound by theory, although some of the organometallic reagent will react with remaining water during the functionalization step, it is believed that the reaction of the organometallic reagent with any remaining water molecules will not significantly reduce the extent to which the surface of the substrate can be functionalised as long as the amount of water present on the surface is limited. The presence of some water molecules at the surface also does not lead to an undesired degree of salt formation.

Consequently, in methods of the present disclosure the drying step can therefore be shorter, performed at lower temperature, and/or does not need to be performed under (high) vacuum conditions. This results in a drying step, and an overall process, having a shorter duration, a lower energy consumption and/or requiring reduced installation costs. Hence, the methods of the present disclosure are less complex than the methods of the state of the arts, and allow easier scaling up to an industrial scale.

### Brief description of the figures

Aspects of the invention will now be described in more detail with reference to the appended drawings, wherein same reference numerals illustrate same features and wherein:
Figure 1 schematically represents the process steps of a method according to a first embodiment of the invention.
Figure 2 schematically represents the process steps of a method according to a second embodiment of the invention.
Figure 3 schematically represents the process steps of a method according to a third embodiment of the invention.

### Description of embodiments

According to an aspect of the present invention, a method is provided for functionalizing an inorganic substrate with an organic group.

The surface of the inorganic substrate comprises a hydroxide and/or an oxide, wherein the hydroxide and/or the oxide comprise an element M. The element M is a metal or a metalloid. In particular, the hydroxide can be a hydroxide of M, and/or the oxide can be an oxide of M.

Advantageously, the element M is a Group IVb metal, or a Group IVa metal. Preferably, the metal M is tin (Sn). Alternatively, the element M is a Group IVb transition metal, in particular titanium (Ti) or zirconium (Zr).

Advantageously, the element M is a Group IVa metalloid, such as silicon (Si), germanium (Ge), antimony (Sb) or tellurium (Te). A preferred example of the metalloid is silicon (Si).

The oxide and/or the hydroxide can comprise a combination of the above elements M, particularly a combination of the above metals and/or metalloids.

The surface of the inorganic substrate can comprise two or more different hydroxides and/or two or more different oxides, each comprising a different element M or a different combination of elements M. For example, the surface of the solid inorganic substrate can comprise a combination of silica and titania, i.e. a combination of an oxide comprising Si and an oxide comprising Ti.

The oxide comprising the element M can be present throughout the bulk of the inorganic substrate. In particular, the inorganic substrate (substantially) consists of the oxide. Alternatively, the oxide comprising the element M can be provided in a surface layer comprising the (exposed) surface of the inorganic substrate. Possibly, a bulk layer adjacent to the surface layer can be substantially free of the oxide. The bulk layer can however comprise the element M, e.g. not as an oxide compound. For example, the bulk layer can be or can substantially comprise silicon carbide (SiC) and the top layer can substantially comprise silicon dioxide (SiO₂).

The hydroxide comprising the element M is advantageously provided in a surface layer comprising the (exposed) surface of the inorganic substrate, i.e. in the form of hydroxyl groups (-OH). Although a bulk layer adjacent to the surface layer may contain a hydroxide, the amount of hydroxide in the bulk layer adjacent to the surface is preferably as small as possible, or the bulk layer adjacent to the surface is substantially free of the hydroxide. Possibly, the bulk layer can comprise the element M as a compound other than a hydroxide, e.g. as an oxide or a carbide.

The inorganic substrate can be porous, such as a porous membrane, a powder comprising porous particles, a porous particle or a porous bead. The inorganic substrate can have a high or a low porosity or it can be non-porous. The inorganic substrate can be in the form of a tube, a sheet such as a membrane, a disc, a hollow fibre, a capillary, a particulate powder, a bead, a hollow shell, a coated film, or any other shape that advantageously is permeable to substances in solution or to gases.

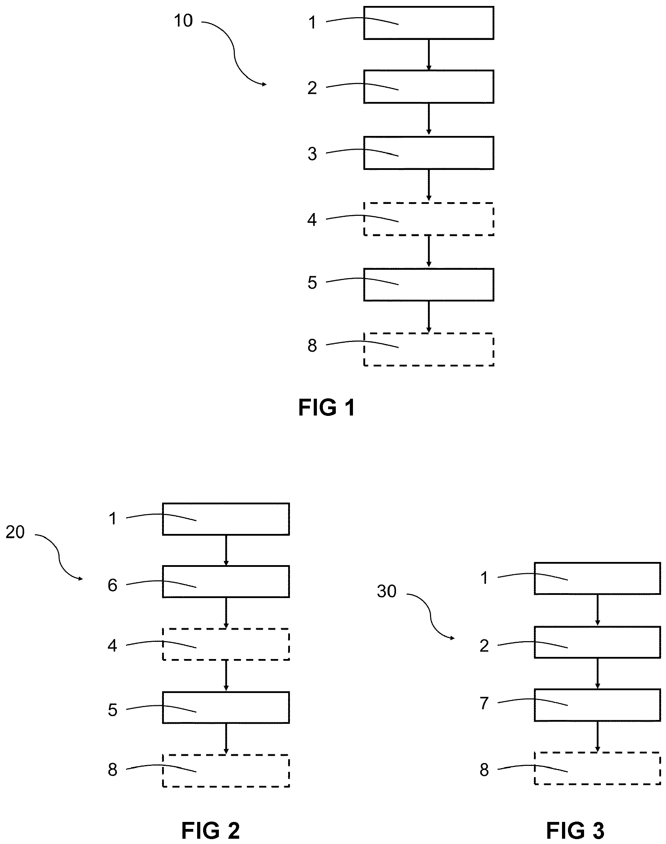

Referring to Fig. 1, representing a first embodiment 10 of methods of the invention, a solid inorganic substrate is provided in step 1. The solid inorganic substrate is dried in a drying step 2. The drying step 2 comprises contacting the inorganic substrate with a flow comprising an inert gas. In particular, an exposed surface of the inorganic substrate is subjected to the drying step 2.

Advantageously, the inert gas is nitrogen, dry air, a noble gas, or a mixture of any two or more thereof. When a noble gas is used, it is preferably argon (Ar) or helium (He). Preferably, the inert gas is nitrogen, dry air or argon. Advantageously, the flow comprises at least 75 vol% of inert gas, such as at least 80 vol%, more preferably at least 90 vol%, such as at least 95 vol%, at least 96 vol%, at least 97 vol%, at least 98 vol%, most preferably at least 99 vol%, for example 99.5 vol%, or 99.9 vol%. Preferably, the flow comprising an inert gas substantially consists of one or more inert gases.

Advantageously, the flow comprising an inert gas is a dry flow. Depending on the water content of the mixture of each step, the skilled person will be capable of determining a maximum water concentration allowed in the gas flow. As an example, the gas flow may comprise equal to or less than 5 vol.% water, preferably equal to or less than 1 vol.% water, more preferably equal to or less than 0.5 vol.% water, such as equal to or less than 0.1 vol.% water, such as equal to or lower than 750 ppm water, equal to or lower than 500 ppm water, equal to or lower than 250 ppm water, or equal to or lower than 100 ppm water.

Advantageously, the flow rate of the flow comprising an inert gas, i.e. the gas flow rate, is at least 5 ml/min, such as at least 10 ml/min, preferably at least 15 ml/min, for example at least 20 ml/min, at least 25 ml/min, at least 30 ml/min, at least 40 ml/min, at least 50 ml/min, at least 75 ml/min, at least 100 ml/min, at least 125 ml/min, at least 150 ml/min, at least 175 ml/min, at least 200 ml/min, at least 250 ml/min, at least 300 ml/min, at least 350 ml/min, at least 400 ml/min, at least 500 ml/min, at least 600 ml/min, at least 700 ml/min, at least 750 ml/min, at least 800 ml/min, at least 900 ml/min, or at least 1000 ml/min. As will be understood, the optimal gas flow rate depends on, without being limited thereto, the inorganic substrate, in particular its composition, shape (e.g. a membrane or a powder), weight, thickness, surface area, and porosity (when porous), and further on the device used, in particular the drying compartment, the drying temperature and the inert gas, in particular its composition.

Advantageously, the drying step is performed at a pressure equal to or higher than atmospheric pressure. Advantageously, the drying step does not include a vacuum treatment. As will be understood, the optimal pressure depends on, without being limited thereto, the nature of the inorganic substrate, in particular its composition, shape (e.g. a membrane or a powder), weight, thickness, surface area, and porosity (when porous), and further on the device used to carry out the drying, in particular the drying compartment, the drying temperature and the nature of the inert gas.

Advantageously, (at least) the surface of the inorganic substrate is contacted with the flow comprising an inert gas at a temperature of at least 90°C, such as 95°C, preferably at least 100°C, such as 110°C, 120°C, 125°C, 130°C, 140°C, 150°C, 160°C, 170°C, 175°C, 180°C, 190°C, more preferably at least 200°C, for example 210°C, 220°C, 225°C, 230°C, 240°C, even more preferably at least 250°C, such as 260°C, 270°C, 275°C, 280°C, 290°C, or 300°C or more.

The inventors have noticed that contacting the surface of the inorganic substrate with the flow comprising an inert gas at a temperature below 90°C may reduce the quality of the inorganic substrate for the further processing steps and of the organic functionalized inorganic substrate obtained with the methods of the invention. Therefore, the drying step is preferably carried out at a temperature of at least 90°C.

Advantageously, the drying time, defined as the duration of contacting the inorganic substrate with the flow comprising an inert gas, is between 15 minutes and 48 hours, such as between 30 minutes and 40 hours, between 1 hour and 36 hours, preferably 1.5 hours and 30 hours, more preferably between 2 hours and 24 hours, such as 2 hours, 2.5 hours, 3 hours, 3.5 hours, 4 hours, 4.5 hours, 5 hours, 5.5 hours, 6 hours, 6.5 hours, 7 hours, 7.5 hours, 8 hours, 8.5 hours, 9 hours, 9.5 hours, 10 hours, 10.5 hours, 11 hours, 11.5 hours, 12 hours, 12.5 hours, 13 hours, 13.5 hours, 14 hours, 14.5 hours, 15 hours, 15.5 hours, 16 hours, 16.5 hours, 17 hours, 17.5 hours, 18 hours, 18.5 hours, 19 hours, 19.5 hours, 20 hours, 20.5 hours, 21 hours, 21.5 hours, 22 hours, 22.5 hours, 23 hours, 23.5 hours, or 24 hours.

The drying time will, without being limited thereto, depend on the temperature and the pressure at which the inorganic substrate is contacted with the flow comprising an inert gas, on the composition of the gas flow, in particular on the nature of the inert gas, on the gas flow rate and on the nature of the solid inorganic substrate, in particular its composition. A lower temperature may require a longer drying time. A higher gas flow rate may lead to a shorter drying time. A substrate with a more hydrophilic character may require a longer drying time.

Still referring to Fig. 1, the drying step 2 is preferably followed by a proton removal step 3. Advantageously, the proton removal step 3 comprises contacting the surface of the solid inorganic substrate with a reagent capable of reacting with protons at the surface of the inorganic substrate.

The reagent can selected from a wide range of compounds, for example one or more of an alcohol, an organophosphonate ester, an organophosphonic ester, an organophosphinic ester, an organophosphinic acid, a carboxylic acid or carboxylate, a catechol, an organosulphonic acid, an alkene, an alkyne, a hydroxamic acid, an alkoxide, or a halogenide. The list of suitable reagents is however not limited to the afore-mentioned compounds.

The reagent capable of reacting with protons can be a gas or a vapour, i.e. the reagent in vapour phase. In the light of the present invention, the words gas and vapour are used having the same meaning, and referring to the reagent being in a volatile state, and thus not in a liquid state nor in a solid state. Alternatively, or additionally, the reagent can be an aerosol or a liquid reagent, such as an organometallic reagent. A liquid reagent can be used in the form of a solution or an emulsion. A proton removal step carried out using a gas or a vapour as a reagent, preferably the temperature is preferably carried out at a temperature of at least 90°C to counteract re-adsorption of water on the substrate surface.

The surface of the solid inorganic substrate can be contacted with two or more reagents capable of reacting with protons at the surface either simultaneously or consecutively. The two or more reagents can be compatible, allowing them to be used simultaneously to remove protons from the surface of the inorganic substrate, e.g. both reagents will react with the surface and not with each other. The two or more reagents can be incompatible, and they are preferably used in consecutive proton removal steps. For example, the substrate can be contacted by a first reagent in vapour phase and by a second reagent in a liquid form, or by a first liquid reagent and a second liquid reagent provided together, such as a solution comprising both liquid reagents and a solvent.

When use is made of a gas or vapour, the proton removal step is advantageously carried out at a temperature of at least 90°C, such as 95°C, preferably at least 100°C. The inventors have discovered that when the proton removal step 3 is performed by contacting a gaseous reagent or a reagent in vapour phase with the surface at a temperature lower than 90°C, any water formed upon proton removal may remain on the surface. Such water may reduce the quality of the inorganic substrate for the further processing steps and of the organic functionalized inorganic substrate obtained with the methods of the invention. Where the proton removal step is carried out using a liquid, a lower temperature can be maintained.

The proton removal step 3 is followed by an optional purging step 4, in which the surface of the inorganic substrate is contacted with a purging compound to remove the excess reagent from the surface and from the reactor. The purging compound can comprise a further flow comprising a gas, such as an inert gas. The further flow comprising an inert gas can have the same or a different composition as the flow comprising an inert gas used for drying the substrate. Alternatively or additionally, the purging compound can comprise a liquid, such as a solvent.

The temperature at which the purging step is carried out may vary and may be selected by the skilled person such that it is high enough to ensure desorption of any adsorbed proton removing agent from the substrate surface taking into account the nature of the proton removing agent used. Preferably, the optional purging step 4 is performed at a temperature of at least 25°C, for example at least 30°C or at least 50°C or at least 90°C, such as 95°C, preferably at least 100°C, such as 110°C, 120°C, 125°C, 130°C, 140°C, 150°C, 160°C, 170°C, 175°C, 180°C, 190°C, more preferably at least 200°C, for example 210°C, 220°C, 225°C, 230°C, 240°C, even more preferably at least 250°C, such as 260°C, 270°C, 275°C, 280°C, 290°C, or 300°C or more. The temperature of the purging step can be the same temperature as the temperature of the drying step.

The purging step 4 can be carried out between 15 seconds and 120 minutes, such as between 30 seconds and 100 minutes, between 1 minute and 90 minutes, preferably between 2 minutes and 60 minutes, for example between 5 minutes and 50 minutes, more preferably between 10 minutes and 45 minutes, such as between 15 minutes and 30 minutes.

A functionalization step 5 comprises contacting the surface of the inorganic substrate with an organometallic reagent, thereby obtaining the organic functionalized inorganic substrate.

Advantageously, the organometallic reagent comprises at least one organic functional moiety. Advantageously, upon contacting the surface with the organometallic reagent, the at least one organic functional moiety of the organometallic reagent is attached to the element M of the hydroxide and/or the oxide by means of a direct M-C bond.

The direct M-C bond can be a covalent bond or a coordinative bond forming an organometallic complex with M. The direct M-C bond does not include an oxygen bridge between the M and C.

Advantageously, the organometallic reagent is a component of the formula R¹-M¹, R¹-M¹-X or R¹-M¹-R². Alternatively, the organometallic reagent can be a component of the formula M¹(R¹,R²,R³). Advantageously, R¹, R², R³ are organic functional groups. Two or all of R¹, R², R³ can be different or identical. For example, R¹ and R² can be identical and R³ can be different from R¹ and R².

The moieties R¹, R² and R³ include any functional group which is compatible with organometallic compounds. The moieties R¹, R² and R³ further also include any functional group which is not compatible with organometallic compounds wherein the functional group is provided in a protected form, i.e. with a protective group. Protective groups are well known in the art and will not be disclosed in detail herein.

Examples of R¹, R² and R³ moieties include, without being limited thereto, alkyl, haloalkyl, aryl, haloaryl, amines (primary, secondary and tertiary amines), thiols, chiral hydrocarbons, and any combination thereof.

Preferably, R¹, R² and R³ are selected from the group comprising: alkyl, preferably C₁₋₁₆alkyl, more preferably C₁-C₈alkyl; haloalkyl, preferably fluoroalkyl or perfluoroalkyl, more preferably fluoroC₁-C₁₆alkyl or perfluoroC₁-C₁₆alkyl, more preferably fluoroC₁-C₈alkyl or (per)fluoroC₁-C₈alkyl; aryl, preferably C₆-C₁₈aryl, more preferably C₆-C₁₂aryl; haloaryl, preferably fluoroaryl or perfluoroaryl, more preferably fluoroC₆-C₁₈aryl or perfluoroC₆-C₁₈aryl, more preferably fluoroC₆-C₁₂aryl or perfluoroC₆-C₁₂aryl; and any combinations thereof.

In particular embodiments, R¹, R² and/or R³ are selected from the group comprising amines, di-amines, tri-amines, thiol, chiral hydrocarbons and any combinations thereof. Combinations in this context may comprise combinations within groups as well as combination between these groups.

R¹, R², or R³ moieties as used herein may comprise linear, branched or cyclic molecules. For instance, the term "alkyl" is intended to encompass linear, branched as well as cyclic alkyl. The term "aryl" is intended to encompass monocyclic, polycyclic or heterocyclic aryl. The term "haloalkyl" is intended to encompass alkyl as defined herein substituted with one or more halogen atoms. The term "(per)fluoroalkyl" is intended to encompass alkyl as defined herein substituted with one or more fluor atoms. The term "haloaryl" is intended to encompass aryl as defined herein substituted with one or more halogen atoms, preferably substituted with between 1 and 5 halogen atoms. The term "(per)fluoroaryl" is intended to encompass aryl as defined herein substituted with one or more fluor atoms, preferably substituted with between 1 and 5 fluor atoms.

Whenever the term "substituted" is used in the context of the present invention, it is meant to indicate that one or more hydrogens or carbons on the atom indicated in the expression using "substituted" is replaced with a selection from the indicated group, provided that the indicated atom's normal valency is not exceeded, and that the substitution results in a chemically stable compound, i.e. a compound that is sufficiently robust to survive isolation to a useful degree of purity from a reaction mixture.

Advantageously, M¹ is a group la element, a group IIa element or Al. Preferably, M¹ is Li, Mg or Al.

Advantageously, X is a halogen. Preferably, X is Br, Cl or I.

Specific examples of suitable organometallic reagents are organomagnesium reagents (preferably Grignard reagents), organolithium, organoaluminium and derivatives.

An organolithium reagent refers to an organometallic reagent with a direct bond between a carbon and a lithium atom. The organolithium reagent can be represented by the general formula R¹-Li wherein R¹ is a moiety as defined herein above.

An organomagnesium reagent refers to an organometallic reagent with a direct bond between a carbon and a magnesium atom. The organomagnesium reagent can be represented by the general formula R¹-Mg-X or R¹-Mg-R², wherein R¹ and R² are moieties as defined herein above and wherein X is a halogen atom, preferably Br, Cl or I. An organometallic reagent as used within the present invention is more preferably a Grignard reagent.

Non-limiting examples of Grignard reagents are phenylmagnesium chloride, phenylmagnesium bromide, propylmagnesium chloride, propylmagnesium bromide, pentylmagnesium chloride, pentylmagnesium bromide, octylmagnesium chloride, octylmagnesium,bromide and methylmagnesium bromide.

Organometallic reagents, and in particular Grignard reagents, are known to be very reactive. In particular, they are strong bases, and will thus easily react with the hydroxide of the element M, wherein the element M is a metal or a metalloid, comprised at the surface of the inorganic substrate. In their reactive condition, the organometallic reagent can leave a salt on the surface after attaching the functional moiety to the element M by a direct M-C bond or removing protons. These salts have shown to be difficult to remove from the surface, and require a washing step using harsh conditions or a sequence of at least two washing steps. Further, the use of organometallic reagents in its pure, non-diluted form can lead to unsafe processing environments due to their high reactivity.

The inventors have discovered that using the organometallic reagent diluted in a solvent provides several advantages: a more stable organometallic reagent is obtained, the salt formation can be reduced, and a safer processing environment can be provided. Although the absolute amount of organometallic reagent present or used may be lower than without dilution of the reagent in a solvent, the reduced salt formation and improved stability allow to obtain the same or even improved degree of modification of the inorganic substrate in a safer processing environment..

Advantageously, the step 5 of contacting the surface of the inorganic substrate with the organometallic reagent is carried out in a liquid phase comprising the organometallic reagent diluted in a solvent. The solvent can be any one known in the state of the art to be compatible with organometallic reagents. Examples of suitable solvents are tetrahydrofuran (THF), diethyl ether, cyclopentyl methylether, or a mixture of any two or more thereof.

Preferably, the solvent is a dry solvent. A solvent is considered dry when at most 250 ppm water is present, preferably at most 200 ppm water, more preferably at most 150 ppm water, such as at most 125 ppm water, at most 100 ppm water, at most 90 ppm water, at most 80 ppm water, at most 70 ppm water, at most 60 ppm water, at most 50 ppm water, at most 40ppm water, at most 30 ppm water, at most 25 ppm water, or at most 20 ppm water. For example, when 0.067M Grignard reagent is diluted in THF for the treatment of 1 gram TiO₂ (titania) powder as solid inorganic substrate, the THF is considered substantially dry when at most 100 ppm water is present.

The inventors have surprisingly noticed that some water molecules can be present in the solution of the organometallic reagent diluted in the solvent. For example, it has been shown that the reagent can react with the water molecules without affecting the degree of modification of the inorganic substrate. However, it is clear that a lower the amount of water leads to less consumption of the organometallic reagent by reactions other than attachment of its functional moiety to the element M, and is thus preferred. The possibility of the presence of a limited amount of water allows the use of less dry solvents, which are typically less expensive, thereby reducing the overall cost of the process.

Advantageously, the step 5 of contacting the surface with the organometallic reagent comprising at least one organic functional moiety is carried out at a temperature between -80°C and 75°C, such as between -75°C and 75°C, between -50°C and 75°C, between -25°C and 70°C, between -10°C and 70°C, between 0°C and 70°C, between 5°C and 65°C, preferably between 10°C and 60°C, for example between 12°C and 55°C, between 15°C and 50°C, more preferably between 18°C and 45°C, such as about room temperature. When the organometallic reagent is diluted in a solvent, the temperature is preferably lower than the boiling temperature of the solvent.

Advantageously, organometallic reagents, and in particular Grignard reagents, are strong bases, which are capable of removing any protons remaining on the surface, regardless whether or not an additional proton removal step is carried out.

The functionalization step 5 can be followed by an optional washing step 8. Advantageously, the washing step is carried out according to methods well known to the skilled person, and may for example involve washing with water, a solvent and/or with an acid, such as a diluted acid. The washing step 8 can be performed in a single step or multiple steps, advantageously without requiring the use of harsh conditions.

A second embodiment 20 of the method of the invention is represented in Fig. 2. Embodiment 20 differs from embodiment 10 in that step 2 of drying the inorganic substrate and proton removal step 3 are combined in a single step 6. All other steps are equal to embodiment 10. In particular, the flow comprising the inert gas used in the drying step 2 further comprises the proton removal reagent, thereby carrying out the drying step and the proton removal step simultaneously in step 6. In other words, the surface of the inorganic substrate is dried and protons are removed therefrom by having a same flow which flows over the surface of the inorganic substrate. The flow comprising an inert gas and the reagent can be considered as a reactive gas flow. Preferably, the reagent comprised in the flow comprising the inert gas is present as a gas or a vapour or an aerosol.

The inventors have surprisingly discovered that with a proton removal agent present in the drying step, the drying can be performed at a lower temperature.

The flow comprising the inert gas and the gaseous reagent or the reagent in vapour phase can be obtained by methods known in the field. For example, the flow can be obtained by bubbling the inert gas through a liquid bath of the reagent, by spraying the reagent in the flow comprising the inert gas, or by evaporating the reagent followed by mixing the vaporized reagent with the flow of inert gas, which can be heated to avoid condensation of the vaporized reagent.

The reagent used for the proton removal according to the second embodiment 20 can be, without being limited thereto, an alcohol, a phosphonate ester, a phosphonic ester, a phosphinic acid, a phosphinic ester, a carboxylic acid or carboxylate, a hydroxamic acid, an alkoxide, a halogenide, or any combination of two or more thereof. The alkoxide is preferably a metal alkoxide. The most appropriate reagent for the proton removal depends on the composition of the inorganic substrate surface, and in particular on the element M. The skilled person is capable of selecting the most appropriate reagent.

Preferred reagents are reagents that form water molecules upon removal of protons from the surface of the inorganic substrate, since the formed water molecules will be removed from the surface and the drying device due to combining the drying step 2 and the proton removal step 3 as described in relation to Fig. 1 in a single step 6.

Preferably, the reagent is an alcohol. The alcohol can be aliphatic or aromatic. The alcohol can be linear, branched, or cyclic with optionally one or more sidechains that can be linear or branched. Preferably, the alcohol is of the formula R¹⁰-OH, wherein R¹⁰ is an alkyl, preferably a C₁₋₈alkyl, such as a C₁₋₆alkyl, more preferably a C_{1-C4}alkyl, and most preferably a C₁₋₂alkyl. Preferred examples of alcohols are methanol, ethanol, isopropanol and butanol.

The amount of reagent comprised in the flow comprising the inert gas is not particularly limited. The flow of inert gas can be saturated with the reagent, in particular when the reagent is present as a vapour. Alternatively, the flow of inert gas can comprise the reagent at an amount lower than saturation level.

Advantageously, the temperature of the step 6 of combined drying and proton removal is high enough to minimize physisorption of the proton removal reagent. Physisorption is the attachment of the reagent to the surface of the inorganic substrate instead of the reagent removing one or more protons, and is thus to be minimized and preferably avoided. For example, when the reagent is an alcohol, such as methanol, the temperature is preferably as indicated in relation to the drying step 2 of embodiment 10, i.e. at least 90°C, such as at least 100°C, preferably at least 150°C, more preferably at least 175°C, most preferably at least 200°C. The inventors have further noticed that at a temperature below 90°C, dissociative adsorption of the proton removing agent may be compromised, and that physical adsorption of the reagent and/or of any formed water may occur, thereby reducing the quality of the organic functionalized inorganic substrate obtained with the methods of embodiment 20.

One advantage of working at a temperature that minimizes the physisorption of the reagent is that re-condensation on the surface of water molecules released from the surface during drying or formed during proton removal, can be minimized.

One advantage of the presence of the reagent in the flow comprising an inert gas is that an improved evacuation of the water molecules away from the surface and out of the device can be obtained. Hence, the step 6 of combined drying and proton removal reduces the drying time and/or the drying temperature to reach a predetermined level of dryness compared to prior art drying methods. Further, since protons are removed simultaneously as well, the total process time is reduced in two ways - reduced drying time and no separate proton removal step - and the number of processing steps is reduced as well, compared to prior art methods and also compared to embodiment 10.

A third embodiment 30 of the method of the invention is represented in Fig. 3. Embodiment 30 differs from the first embodiment 10 in that proton removal step 3 and the functionalization step 5 are combined in a single step 7. In such case, protons are removed from the surface simultaneously with the attachment of the at least one organic functional moiety to the element M of the hydroxide and/or the oxide by means of a direct M-C bond, thereby obtaining the organic functionalized inorganic substrate. Consequently, the optional purging step 4 is not carried out in embodiment 30. The step of providing 1 the inorganic substrate, the drying step 2 and the optional washing step 8 can be performed as described in relation to embodiment 10.

In step 7, the proton removing organometallic reagent(s) can be the same as or different from the organometallic reagent(s) reacting with the surface of the inorganic substrate, i.e. the reagent(s) used in step 5 above.

When the organometallic reagents used in step 7 are the same for the proton removal and for reacting with the surface, a first portion of the organometallic reagent(s) can remove protons from the surface, whereas a second portion of the organometallic reagent can simultaneously react with the surface to attach the functional moiety to the element M, thereby obtaining the organic functionalized inorganic substrate.

When different organometallic reagents are used for proton removal and reacting with the surface in step 7, a mixture of the reagents is advantageously used to carry out simultaneous proton removal and functionalization of the surface.

A preferred organometallic reagent used in step 7 is a Grignard reagent.

An advantage of simultaneously removing protons and functionalizing the surface of the substrate in a single step 7 is that the total processing time is reduced and the process is less complex.

It will be convenient to note that steps of embodiments 20 and 30 can be combined. In particular, in a fourth embodiment (not shown), embodiment 20 is modified in that step 5 is replaced with step 7 of embodiment 30. Hence, a first portion of the protons are removed from the surface of the inorganic substrate as in step 6. Next, an organometallic reagent removes a second, remaining portion of the protons from the surface of the inorganic substrate in step 7 as described above.

The organic functionalized inorganic substrates obtained through methods of the present disclosure are advantageously used as a membrane, a sorbent, a catalyst, a sensor or an electronic component. The organic functionalized inorganic substrate obtained through methods of the present disclosure can further be used as a substrate in filtration, adsorption, chromatography and/or separation processes.

### Examples

### Example 1

As reference samples (reference samples 1 and 2 in Table 1), organic functionalized inorganic substrates were produced by means of a prior art process.

As the solid inorganic substrate a titania powder was used, produced according to the details disclosed in 'Synthesis - properties correlation and the unexpected role of the titania support on the Grignard surface modification', J. Van Dijck, P. Mampuys et al., Applied Surface Science 527 (2020) 146851.

Reference sample 1 was obtained by drying the surface of the titania powder for 16 hours at a pressure of 10⁻⁴ mbar and at 190°C in the absence of a flow comprising an inert gas. Next, the protons were removed from the surface of the dried titania powder by submersing the dried substrate in liquid methanol (50 ml) for 48 hours at 120°C . The powder was dried again (16 hours at 60°C and at a pressure of 10⁻⁴ mbar) to remove any remaining methanol from its surface, and the powder was then brought in contact with octylmagnesium chloride (abbreviated as 8Gr), an organometallic reagent, diluted in 30 ml of THF at a concentration of 2 mmol per gram of titania substrate for 24 hours at room temperature (RT) to obtain reference sample 1.

Reference sample 2 was obtained by performing the same drying as for reference sample 1. Next, a step of combined proton removal and functionalization of the surface was performed by bringing the powder in contact with 8Gr diluted in 30 ml of THF at a concentration of 2 mmol per gram of titania substrate for 24 hours at room temperature, to obtain reference sample 2.

The degree of modification was measured by thermogravimetric analysis (TGA), and was 0.80 groups/nm² for reference sample 1 and 0.79 groups/nm² for reference sample 2. This was above the 0.7 groups/nm², which is considered the minimal value for a good degree of modification for this type of titania substrate and this organometallic reagent.

### Example 2

Three samples (samples 1, 2 and 3 of Table 1) were prepared according to the second embodiment of the invention. The process parameters for the combined drying and proton removal step were varied. The inorganic substrate was the same as the substrate for the reference sample.

Methanol was used as the reagent for proton removal. A 30 ml/min flow of N₂ + methanol (vapour) was used for a duration of 4 hours, wherein methanol was added to the N₂ until saturation of the N₂ by the methanol. The temperatures used were 80°C, 100°C and 200°C.

The substrate was then brought in contact with 8Gr diluted in 30 ml of THF at a concentration of 2 mmol/g of titania powder for 24 hours at room temperature to obtain the organic functionalized inorganic substrates. In other words, the functionalization step was the same as for the reference samples of Example 1.

The degree of modification was measured as described above. From Table 1 it is clear that for a temperature of 80°C the degree of modification for this specific combination of titania powder and organometallic reagent (8Gr) is not sufficient (0.63 groups/nm²). It was found that at this temperature physisorption of the methanol took place, and that the water possibly recondensed, as explained above, leading to a lower degree of modification than for the same process step performed at 100°C (0.83 groups/nm²) and 200°C (0.76 groups/nm²). Given the error margin of 0.1 groups/nm², samples 1 and 2 show a similar quality as the reference samples.

### Example 3

Three samples (samples 4, 5 and 6 of Table 1) were prepared according to the third embodiment of the invention, wherein the process parameters of the drying step were varied. The inorganic substrate was the same as the substrate in Examples 1 and 2.

The drying was performed by using a flow of N₂. The flow rate was varied between 30 ml/min and 100 ml/min. The temperature was varied between 200°C and 250°C. The duration was varied between 4 hours and 16 hours.

Afterwards, the substrate was brought in contact with 8Gr diluted in 30ml of THF at a concentration of 2 mmol/g titania powder for 24 hours at room temperature to remove protons and to attach the at least one functional moiety, thereby obtaining the organic functionalized inorganic substrates. In other words, the functionalization step was the same as for reference sample 1.

The degree of modification was measured as described above, see Table 1. When the drying is performed at 200°C, the degree of modification after 4 hours was not sufficient for this specific titania powder and organometallic reagent (0.67 groups/nm²), even for an increased flow rate of 100 ml/min, while after 16 hours at a lower flow rate of 30 ml/min, a good degree of modification is obtained (0.77 groups/nm²). Given the error margin of 0.1 g/nm², sample 4 shows a similar quality as the reference samples. By increasing the temperature to 250°C and maintaining a flow rate of 30 ml/min, a borderline sufficient degree of modification can be obtained after 4 hours (0.71 groups/nm²).

**Table 1**

| **Sample** | **Drying** | **Proton removal** | **Attachment functional moiety** | **Degree of modification (groups/nm²)** |
|---|---|---|---|---|
| Reference sample 1 | Vacuum drying | Liquid methanol | 2 mmol/l 8Gr in THF | 0.79 |
| | | | 24h at RT | |
| Reference sample 2 | Vacuum drying | 2 mmol/I 8Gr in THF | | 0.80 |
| | | 24h at RT | | |
| Sample 1 | 30 ml/min N₂ + methanol (vapour) 4h at 200°C | | 2 mmol/l 8Gr in THF | 0.76 |
| | | | 24h at RT | |
| Sample 2 | 30 ml/min N₂ + methanol (vapour) 4h at 100°C | | 2 mmol/l 8Gr in THF | 0.83 |
| | | | 24h at RT | |
| Sample 3 | 30 ml/min N₂ + methanol (vapour) 4h at 80°C | | 2 mmol/l 8Gr in THF | 0.63 |
| | | | 24h at RT | |
| Sample 4 | 30 ml/min N₂ | 2 mmol/l 8Gr in THF | | 0.77 |
| | 16h at 200°C | 24h at RT | | |
| Sample 5 | 100 ml/min N₂ | 2 mmol/l 8Gr in THF | | 0.67 |
| | 4h at 200°C | 24h at RT | | |
| Sample 6 | 30 ml/min N₂ | 2 mmol/l 8Gr in THF | | 0.71 |
| | 4h at 250°C | 24h at RT | | |

### Example 4

The degree of irreversible fouling was measured on an untreated single tubular TiO₂ membrane having a toplayer with a pore size of 0.9 nm, an outer diameter of 10 mm and a length of 25 cm (delivered by Inopor) (sample *"No treatment"* in Table 2). This was done by measurement of the water flux after fouling the membrane with humic acids and comparing it with the water flux before the fouling, as disclosed in 'Novel grafting method efficiently decreases irreversible fouling of ceramic nanofiltration membranes', G. Mustafa, K. Wyns et al., Journal of Membrane Science 470 (2014) 369-377. The normalised water flux, defined as the ratio of the water flux after fouling and the water flux before fouling, is a measure of the irreversible fouling of a membrane. A lower normalised flux indicates a higher irreversible fouling, and vice versa. As reported in the same paper, the untreated sample showed a normalised water flux of 45% ± 5%, much lower than the value found for a membrane modified with methylmagnesium bromide with a good modification quality, which is at least 90% for the specific type of substrate. Therefore, the normalised water flux is an excellent way to measure the quality of the modification of this specific type of membrane substrates.

A reference sample ("*Reference sample*" in Table 2) was obtained by drying the surface of the titania membrane for 16 hours at a pressure of 10⁻⁴ mbar and at 190°C in the absence of a flow comprising an inert gas. The titania membrane was the same as the untreated membrane described above. Next, the substrate was brought in contact with methylmagnesium bromide (CH₃MgBr, abbreviated as C1), an organometallic reagent with a methylgroup as functional moiety, diluted in THF at a concentration of 0.045M for 24 hours at room temperature to remove protons and to attach the at least one functional moiety, thereby obtaining the organic functionalized titania membranes.

The normalised water flux of the reference sample was measured according to the same method as for the untreated titania membrane, and reported an excellent modification quality of 94%.

### Example 5

One sample (sample 1 of Table 2) was prepared according to the second embodiment of the invention. The inorganic substrate was the same as the titania membrane used in Example 4.

A flow of N₂ was used for drying the surface of the membrane for 12 hours at 150°C, followed by adding methanol vapour to the N₂ flow for 4 hours at 150°C for combined drying and proton removal, wherein methanol was the reagent for proton removal. During the combined drying and proton removal step, a 20 l/h flow of N₂ + methanol (vapour) was used, wherein methanol was added to the N₂ until saturation of the N₂ by the methanol.

Next, the substrate was brought in contact with C1 diluted in THF at a concentration of 0.045M for 24 hours at room temperature to obtain the organic functionalized titania membranes.

The normalised water flux was measured as described in Example 4. From Table 2 it is clear that the modification quality is in the same range as for the reference sample and is thus considered good, while a lower temperature and no vacuum were used to obtain the organic functionalized titania membrane, thereby reducing the overall energy consumption and thus the cost of the treatment.

### Example 6

Three samples (sample 2, 3 and 4 of Table 2) were prepared according to the third embodiment of the invention. The inorganic substrate was the same as the titania membrane used in Example 4.

The drying was performed by using a flow of N₂. Both dry N₂ (samples 2 and 3) and wet N₂ (sample 4) were used. The dry N₂ comprised at most 0.02 ppm of water. The flow rate was 20 l/h. The temperature was 200°C. The duration was varied between 4 hours and 16 hours for the dry N₂ flow, and was 16 hours for the wet N₂ flow.

Next, the substrate was brought in contact with C1 diluted in THF at a concentration of 0.045M for 24 hours at room temperature to remove protons and to attach the at least one functional moiety, thereby obtaining the organic functionalized titania membranes. In other words, the combined proton removal and functionalization was the same as for the reference sample of Example 4.

The normalised water flux was measured as described in Example 4. From Table 2 it is clear that the modification quality is excellent and even higher than for the reference sample, even for a drying time of 4 hours, when the flow of N₂ is dry. However, when the flow of N₂ is not sufficiently dry, the quality of the modification decreases significantly, but is still better than the untreated titania membrane.

**Table 2**

| **Sample** | **Drying** | **Proton removal** | **Attachment functional moiety** | **Modification quality (%)** |
|---|---|---|---|---|
| No treatment | None | None | None | 45% ± 5% |
| Reference | Vacuum drying | 0.045M C1 in THF | | 94% |
| sample | 16h at 190°C | 24h at RT | | |
| Sample 1 | 20 l/h N₂ + 4h methanol (vapour) | | 0.045M C1 in THF | 90% |
| | 16h at 150°C | | 24h at RT | |
| Sample 2 | 20 l/h N₂ | 0.045M C1 in THF | | 111% |
| | 16h at 200°C | 24h at RT | | |
| Sample 3 | 20 l/h N₂ | 0.045M C1 in THF | | 99% |
| | 4h at 200°C | 24h at RT | | |
| Sample 4 | 20 l/h wet N₂ | 0.045M C1 in THF | | 66% |
| | 16h at 200°C | 24h at RT | | |

## Claims

1. A method for producing an organic functionalized solid inorganic substrate, wherein a surface of the inorganic substrate comprises a hydroxide and/or an oxide, wherein the hydroxide and/or the oxide comprises an element M, wherein the element M is a metal or a metalloid, the method comprising the steps of:
(i) drying the surface,
(ii) optionally removing protons from the surface, and
(iii) contacting the surface with an organometallic reagent comprising at least one organic functional moiety, wherein the at least one organic functional moiety is attached to the element M of the hydroxide and/or the oxide by means of a direct M-C bond not including an oxygen bridge, thereby obtaining the organic functionalized inorganic substrate,
**characterized in that** the drying step comprises contacting the surface with a flow comprising an inert gas.

2. The method of claim 1, wherein the drying step is carried out at a pressure of at least atmospheric pressure.

3. The method of claim 1 or 2, wherein contacting the surface with the flow comprising an inert gas is carried out at a temperature of at least 90°C, preferably at least 100°C, more preferably at least 150°C, most preferably at least 200°C, in particular at least 250°C.

4. The method of any one of the preceding claims, wherein the inert gas is selected from the group consisting of: nitrogen, dry air, a noble gas, in particular argon (Ar) or helium (He), and a mixture of any two or more thereof.

5. The method of any one of the preceding claims, comprising (ii) removing protons from the surface, which comprises contacting the surface with a reagent capable of reacting with protons at the surface.

6. The method of claim 5, wherein the reagent is an alcohol, an organophosphonate ester, an organophosphonic ester, an organophosphinic acid, a carboxylic acid or carboxylate.

7. The method of claim 5 or 6, wherein the reagent is contacted with the surface as a gas, a vapour, an aerosol, or a liquid.

8. The method of any one of claims 5 to 7, wherein the flow comprising the inert gas further comprises the reagent so as to simultaneously perform the steps of drying the surface and removing protons from the surface.

9. The method of claim 8, wherein the inert gas is bubbled through a liquid bath of the reagent or the reagent is sprayed in the flow comprising the inert gas, thereby obtaining the flow comprising the inert gas and the reagent.

10. The method of any one of the preceding claims, comprising the step of removing protons from the surface, wherein the step of removing protons from the surface comprises contacting the surface with the organometallic reagent, preferably wherein contacting the surface with the organometallic reagent obtains removing protons from the surface and obtaining the organic functionalized inorganic substrate.

11. The method of any one of the preceding claims, wherein the organometallic reagent responds to the formula R¹-M¹, R¹-M¹-X, or R¹-M¹-R², wherein R¹ and R² are organic functional groups, wherein R¹ and R² are different or identical, M¹ is Li or Mg, and X is a halogen.

12. The method of any one of the preceding claims, wherein the element M is a Group IVb transition metal, a Group IVa metal or a metalloid.

13. The method of any one of the preceding claims, further comprising a washing step.

14. The method of any one of the preceding claims, wherein the solid inorganic substrate is a powder, a particle, a shaped substrate, a coated film or a membrane.

15. Use of the organic functionalized inorganic substrate obtained by the method of any one of the preceding claims as a membrane, a catalyst, a sorbent, a sensor or an electronic component, or as a substrate in filtration, adsorption, chromatography and/or separation processes.
